(19) Europäisches Patentamt European Patent Office Office européen des brevets

(11) **EP 4 220 317 B1**

(12) **EUROPEAN PATENT SPECIFICATION**

(45) Date of publication and mention
of the grant of the patent:
**10.09.2025 Bulletin 2025/37**

(21) Application number: **23153752.3**

(22) Date of filing: **27.01.2023**

(51) International Patent Classification (IPC):
**G05B 19/4069** (2006.01) **G05B 19/416** (2006.01)

(52) Cooperative Patent Classification (CPC):
**G05B 19/4163; G05B 19/4069;** G05B 2219/35346;
Y02P 90/02

(54) **BENDING MOMENT BASED FEED-SCHEDULING IN MACHINING**

AUF BIEGEMOMENT BASIERENDE ZUFÜHRPLANUNG BEI DER BEARBEITUNG

PLANIFICATION D'ALIMENTATION BASÉE SUR UN MOMENT DE FLEXION DANS L'USINAGE

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR

(30) Priority: **28.01.2022 US 202263304486 P**

(43) Date of publication of application:
**02.08.2023 Bulletin 2023/31**

(73) Proprietor: **RTX Corporation**
**Farmington, CT 06032 (US)**

(72) Inventors:
• **KOUNTANYA, Raja Krishnan**
**Vernon (US)**
• **FROMERTH, Eric**
**Manchester (US)**
• **GUO, Changsheng**
**South Windsor (US)**

(74) Representative: **Dehns**
**10 Old Bailey**
**London EC4M 7NG (GB)**

(56) References cited:
**US-A1- 2015 127 139 US-A1- 2017 227 945**

• **KARUNAKARAN K P ET AL:** "Octree-based NC simulation system for optimization of feed rate in milling using instantaneous force model", THE INTERNATIONAL JOURNAL OF ADVANCED MANUFACTURING TECHNOLOGY, SPRINGER, BERLIN, DE, vol. 46, no. 5-8, 13 June 2009 (2009-06-13), pages 465 - 490, XP019776915, ISSN: 1433-3015
• **MERDOL S D ET AL:** "Virtual cutting and optimization of three-axis milling processes", INTERNATIONAL JOURNAL OF MACHINE TOOLS AND MANUFACTURE, ELSEVIER, AMSTERDAM, NL, vol. 48, no. 10, 1 August 2008 (2008-08-01), pages 1063 - 1071, XP022673499, ISSN: 0890-6955, [retrieved on 20080313], DOI: 10.1016/J.IJMACHTOOLS.2008.03.004
• **ALTINTAS ET AL:** "Virtual High Performance Milling", CIRP ANNALS, ELSEVIER BV, NL, CH, FR, vol. 56, no. 1, 1 January 2007 (2007-01-01), pages 81 - 84, XP022116179, ISSN: 0007-8506, DOI: 10.1016/J.CIRP.2007.05.022
• **LU XIAOHONG ET AL:** "Cutting parameters optimization for MRR under the constraints of surface roughness and cutter breakage in micro-milling process", JOURNAL OF MECHANICAL SCIENCE AND TECHNOLOGY, SPRINGER, DE, vol. 32, no. 7, 18 July 2018 (2018-07-18), pages 3379 - 3388, XP036549735, ISSN: 1738-494X, [retrieved on 20180718], DOI: 10.1007/ S12206-018-0641-7

**Description**

TECHNCIAL FIELD

The present disclosure relates generally to machining processes, and more particularly to grinding and milling systems and methods for developing custom feed rate schedules.

BACKGROUND

The milling and grinding processes for various components include grinding and milling components. Grinding and/or milling process may include complex toolpaths and grinding and/or milling components may include complex geometries. Very minimal modeling is done to predict cutter breakage. Milling and/or grinding processes are designed with high factors-of-safety harming productivity, machine and tool utilization. Additionally, a lead time for parts delivery may be extended due to these issues.

Well designed fixturing is desired to hold the part against the forces incurred during the milling and grinding processes. Some components are typically relatively slender for purposes of minimizing weight. Consequently, they tend to require much more sensitive process planning and process parameter selection. Accuracies necessary for assembly of aero parts within the engine tend to also be more stringent than, say, in automotive or mold-die components. Minimizing chances of tool breakage the machining of expensive aerospace parts may be beneficial.

US 2017/227945 A1 discloses a pre-process simulation that may calculate operating conditions of a machine tool by simulating a NC program and calculate predicted values indicative of the operating conditions.

An octree-based (numerical control) NC simulation (Oct-OAC) system developed for end milling and having two major applications: (1) NC verification and (2) optimization of the cutting parameters, viz., spindle speed, and feed rate; is disclosed in Karunakaran K P et al. (2009). Octree-based NC simulation system for optimization of feed rate in milling using instantaneous force model. The International Journal of Advanced Manufacturing Technology.

Generalized process simulation and optimization strategies to predict and improve the performance of three-axis milling operations are described in Merdol S D et al. (2008). Virtual cutting and optimization of three-axis milling processes. The International Journal of Machine tools and Manufacture.

A generalized process simulation and optimization strategy for 2 1/2 axis milling operations to increase Material Removal Rate (MRR) while avoiding machining errors is disclosed in Altintas et al. (2007). Virtual High Performance Milling. Cirp Annals

US 2015/127139 A1 discloses a real-time numerical control tool path adaptation using force feedback.

A theoretical model for predicting micro-milling cutter breakage is presented and micro-milling experiments were conducted to establish statistical models of cutter breakage and surface roughness in Lu Xiaohong et al. (2018). Cutting parameters optimization for MRR under the constraints of surface roughness and cutter breakage in micro-milling process. Journal of Mechanical Science and Technology.

SUMMARY

According to an aspect of the invention, a feed rate scheduling method is disclosed as recited in claim 1.

In various embodiments, the calculating the feed rate schedule comprises simulating a metal cutting process of the subtractive component in a virtual machining simulation environment using the engagement geometry and the tool path. The calculating the feed rate schedule may further comprise comparing each bending moment in the plurality of bending moments of the spindle to a bending moment threshold.

In various embodiments, calculating the plurality of bending moments on the tool and spindle includes calculating local forces at various local engagement locations of the engagement geometry along the tool path. The local forces may be calculated based on a tip speed of the subtractive component, a local normal rake angle, and an uncut chip thickness. A plurality of local bending moments may be calculated based on the local forces and an axial distance from the spindle to a local location experiencing the local forces to calculate each bending moment in the plurality of bending moments.

In various embodiments, the method may further comprise performing the CNC machining process with the subtractive component and the feed rate schedule.

In various embodiments, the method further comprises forming the component by performing the CNC machining process.

According to an aspect of the invention, a milling process simulator for feed rate scheduling for a subtractive component is disclosed as recited in claim 8.

In various embodiments, calculating the feed rate schedule further comprises comparing each bending moment in the plurality of bending moments to a threshold bending moment at each interval in the various intervals along the tool path. Calculating the feed rate schedule may further comprise customizing the feed rate schedule based on the comparison.

In various embodiments, calculating each bending moment in the plurality of bending moments further comprises calculating a plurality of local bending moments on the tool based on the engagement contour of the subtractive component. Each local bending moment in the plurality of local bending moments may be calculated based on a tip speed of the subtractive component, a local normal rake angle, and an uncut chip thickness. Each local bending moment in the plurality of local bending moments may be calculated based on a local force and an axial distance from the spindle to a local location of the local force on the subtractive component.

According to an aspect of the invention, a method is disclosed as recited in claim 12.

In various embodiments, calculating the feed rate schedule further comprises comparing each bending moment in the plurality of bending moments to a threshold bending moment at various intervals along the tool path. Calculating the feed rate schedule may further comprise customizing the feed rate schedule based on the comparing.

In various embodiments, the method may further comprise using the feed rate schedule during a computer numerical control (CNC) machining process.

The foregoing features and elements may be combined in various combinations without exclusivity, unless expressly indicated otherwise. These features and elements as well as the operation thereof will become more apparent in light of the following description and the accompanying drawings. It should be understood, however, the

following description and drawings are intended to be exemplary in nature and nonlimiting.

BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.

FIG. 1 illustrates various aspects of a cutting wheel mounted to a machine tool and milling a work piece according to various embodiments;

FIG. 2 illustrates a method of determining a feed rate schedule for a machining process, in accordance with various embodiments;

FIG. 3A illustrates a profile creation for a serrated tool for use in the method of FIG. 2, in accordance with various embodiments;

FIG. 3B illustrates serrated tool tip points extraction and clustering for use in the method of FIG. 2, in accordance with various embodiments;

FIG. 3C illustrates constant arc length steps and local rake normal correspondence for use in the method of FIG. 2, in accordance with various embodiments;

FIG. 4A illustrates straight edge oblique cutting template with local vectors and angles applied to a helical edge, in accordance with various embodiments;

FIG. 4B illustrates straight edge oblique cutting template with local vectors and angles applied to a serrated helical edge, in accordance with various embodiments;

FIG. 5 illustrates a flow chart for local rake normal correspondence for use in the method of FIG. 2, in accordance with various embodiments;

FIG. 6 illustrates locations on edge i = 3 ($p_3$) and surfaces I = 2 ($\overline{p}_2$) and i = 4 ($\overline{p}_4$) for chip producing protrusion $s_{32} \leq s \leq s_{34}$ and a respective vector key;

FIG. 7 illustrates an example calculation of intersection of edge curve of flue $p_3$ and stock surfaces $\overline{p}_2$ and $\overline{p}_4$ immediately preceding and following flute i = 3, in accordance with various embodiments;

FIG. 8 illustrates a step from the method of FIG. 2, in accordance with various embodiments;

FIG. 9 illustrates a physics-based grinding/milling process simulator, in accordance with various embodiments;

FIG. 10A illustrates an end mill with various parameters labeled, in accordance with various embodiments;

FIG. 10B illustrates a detail view of the end mill of FIG. 10A, in accordance with various embodiments;

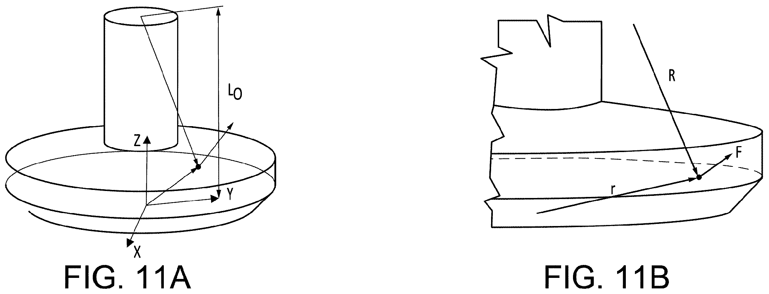

FIG. 11A illustrates a face mill with various parameters labeled, in accordance with various embodiments; and

FIG. 11B illustrates a detail view of the face mill of FIG. 11A, in accordance with various embodiments.

DETAILED DESCRIPTION

The detailed description of exemplary embodiments herein refers to the accompanying drawings, which show exemplary embodiments by way of illustration and their best mode. While these exemplary embodiments are described in sufficient detail to enable those skilled in the art to practice the inventions, it should be understood that other embodiments may be realized and that logical, chemical and mechanical changes may be made without departing from the scope of the disclosure. Thus, the detailed description herein is presented for purposes of illustration only and not of limitation. For example, the steps recited in any of the method or process descriptions may be executed in any order and are not necessarily limited to the order presented.

Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

As used herein, phrases such as "make contact with," "coupled to," "touch," "interface with" and "engage" may be used interchangeably. Different cross-hatching is

used throughout the figures to denote different parts but not necessarily to denote the same or different materials.

As used herein, the term "feed rate" refer to a speed at which a cutter engages a part and may be measured in units of distance per minute. A "subtractive component" as disclosed herein may refer to a cutter (e.g., a serrated endmill cutter, a helical cutter, end mills, twist drills, fly cutters, etc.).

Bending moments of subtractive components during a computer numerical control (CNC) machining process are driven by forces that naturally fluctuate in milling. Additionally, with more complex geometries for subtractive components (e.g., serrated endmill cutters), simplistic assumptions for bending moments may result in machining processes with high factors of safety and/or slow feed rates resulting in lost productivity and/or a reduction in machine and tool utilization. In this regard, modeling and simulations of a machining process that account for discretized bending moments for a specific tool geometry may facilitate a machining process with a customized feed schedule that results in faster processing for a component and/or lower factors of safety with increased reliability, in accordance with various embodiments.. Any simulation / modeling process developing a feed schedule for machining based on bending moments of a tool geometry during the machining process is within the scope of this disclosure.. For example, bending moment assumptions may be overly simplified in typical systems, resulting in significantly longer processing times relative to the customized feed scheduling developed from the processes and systems disclosed herein.

Systems and methods of the present disclosure provide feed rate and spindle speed scheduling based on predicted bending moments during a machining process. "scheduling" as referred to herein refers to a defining a parameter (e.g., feed rate, spindle speed, etc.), as a function of a tool path (e.g., a tool path for a subtractive component, such as a cutter) and/or time, for a given machining process.

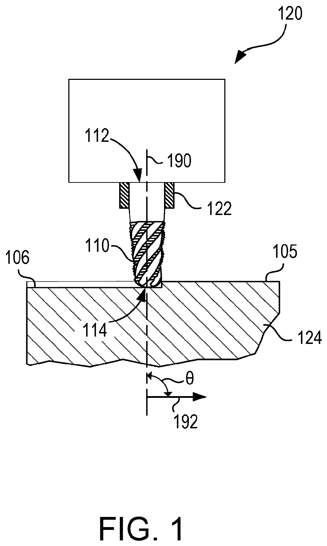

With reference to FIG. 1, a machine tool 120 comprising a spindle 122 (e.g., a machine tool spindle) is illustrated, in accordance with various embodiments. A subtractive component 110 (e.g., a serrated endmill cutter) is shown mounted to the spindle 122. Spindle 122 may be a multi-axis machine tool spindle 122. The machine tool 120 rotates the subtractive component 110 about a central longitudinal axis 190 and translates the

subtractive component 110 in one or more directions (e.g., a direction of translation 192) to machine a workpiece 124. In various embodiments, workpiece 124 comprises any material known in the art, such as a nickel-base metallic alloy, a titanium based metal alloy, an aluminum based metal alloy, etc. The present disclosure is not limited in this regard.

Exemplary rotation is in a rotational direction about central longitudinal axis 190 at a rotational speed in excess of 10,000 rotations per minute (rpm) (e.g., in the range of 40,000 rpm-90,000 rpm in various embodiments). Exemplary translation is in a direction at an angle $\theta$ with respect to central longitudinal axis 190 (e.g., in the illustrated embodiment the translational direction 192 is at an angle $\theta$ of 90 degrees with respect to central longitudinal axis 190) at a translational speed which is also referred to herein as a feed rate. In various embodiments, based on a machining process for a given component, the angle $\theta$ may vary throughout the machining process.

The feed rate may be limited to a maximum feed rate, for example 100 inches per minute (ipm) in various embodiments. However, it should be understood that the feed rate may vary depending on the cutting effectiveness of subtractive component 110 the type of material being cut, among other factors. Furthermore, the feed rate throughout a machining process may vary based on predicted bending moments of the subtractive component 110. For example, a feed rate threshold may be based on a bending moment threshold for the subtractive component. A modeling process or system, as disclosed herein, may determine predicted local bending moments, aggregate the predicted local bending moments, and/or calculate a total bending moment and compare the moment(s) to a bending moment threshold for the subtractive component to in order to develop a customized feed schedule (i.e., a customized feed rate as a function of tool path for a respective machining process).

The traversal of the subtractive component 110 removes material below a surface 105 and leaves a cut surface 106 on the workpiece 124. The machine tool 120 may further reorient the central longitudinal axis 190. Alternatively, or additionally, the machine tool 120 may reposition or reorient the workpiece 124. In either situation, the cutting angle $\theta$ may vary throughout the machining process based on a tool path for a respective component to be formed. In various embodiments, the subtractive component 110 includes a metallic body extending from a proximal end 112 to a distal end 114 (e.g., a tip). The proximal end 112 may be used as a reference point for measuring a local length at a local

position of the subtractive component 110 for local moment calculations, as described further herein.

The present disclosure provides systems and methods for optimized feed rate scheduling of a subtractive component 110 using local bending moment estimations for a machining process of a respective component. In various embodiments, the component may be an aerospace component. However, the present disclosure is not limited in this regard.

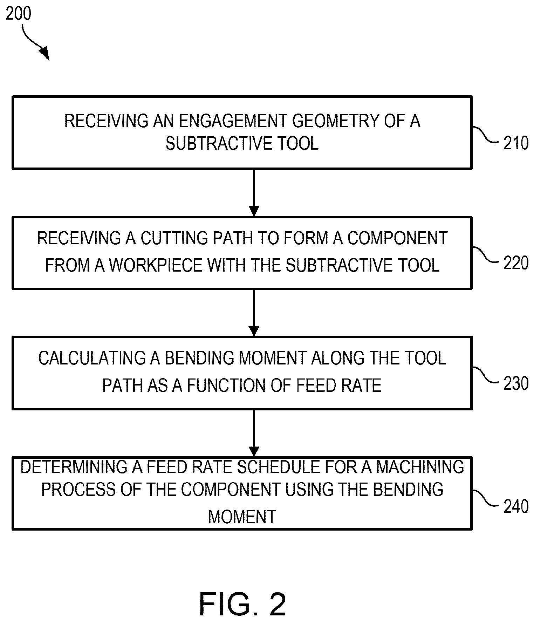

With reference now to FIG. 2, a method 200 for optimized feed rate scheduling is provided, in accordance with various embodiments. Method 200 includes receiving an engagement geometry of a subtractive tool (e.g., subtractive tool 100 from FIG. 1) (step 210). The method 200 further includes receiving a tool path to form a component from a workpiece (e.g., workpiece 124 from FIG. 1) with the subtractive tool (e.g., subtractive tool 100 from FIG. 1). The method 200 further comprises calculating a bending moment as a function of feed rate for the subtractive tool based on the engagement geometry and the tool path (step 230). The method 200 further comprises calculating one or more feed rate scheduling parameters for the tool path using the bending moment as a function of feed rate.

In various embodiments, the feed rate scheduling parameters may be implanted in a machining process as described further herein for the component to be manufactured. For example, the feed rate schedule may be customized based on the bending moments calculated in step 230 throughout the machining of a workpiece 124 via the machine tool 120 in FIG. 1.

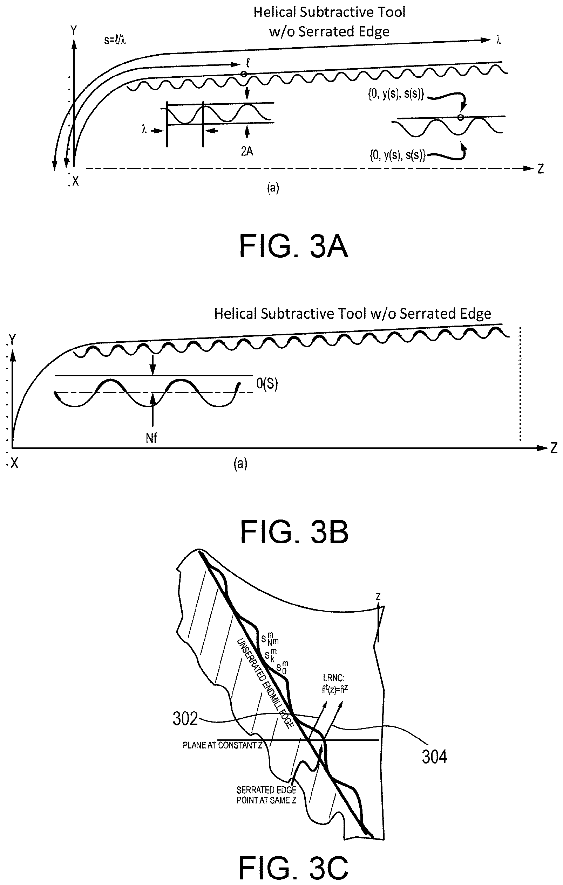

With combined reference to FIG. 2 and FIG. 3A, step 230 and 240 may include modeling the subtractive component along the tool path.

With combined reference to FIG. 2 and 3A, the engagement geometry of step 210 may be defined along a tool coordinate system with an origin at a tool tip (e.g., proximal end 112 of subtractive component 110 from FIG. 1), and a Z-axis defined along a tool axis (e.g., central longitudinal axis 190 of subtractive component 110 from FIG. 1), an X-axis defined in the plane of Z and tool tip velocity V. For a subtractive tool 100 having a helical profile only (e.g., without a serrated edge), s is the non-dimensional rotational profile location variable, $y(s) > 0$ is radius and $z(s)$: $z'(s) \geq 0$ axial distance. An axis-symmetric surface $(s, \phi)$ is given in equation (1) below for a general radius function $\psi(s) > 0$. Then outer envelope surface is given by $\overline{S}_y(s, \phi)$.

$$\overline{S}_\psi(s, \phi) = \{\psi(s) \cos \phi , \psi(s) \sin \phi , z(s)\} \qquad (\text{eq. } 1)$$

The small departure in radial location of the serrated edge relative to $y(s)$ is expressed as an oscillating function $\psi_i(s) = y(s) + AO_i(s)$ of flute $i = 1,2 \dots$ increasing in tool rotation sense. Exemplary sinusoidal oscillation $O_i(s)$ given by equation (2), satisfies: (a) surface envelope $\overline{S}_i(s, \phi) = \overline{S}_{\psi i}(s, \phi)$ is enclosed by $\overline{S}_y(s, \phi)$, (b) constant wavelength $\lambda$ along tool axis (Z-axis from FIG. 3A), (c) constant phase shift $PS = \pm 1$ one flute to next (d) constant amplitude $A \ll y(s)$ as in Fig. 3A. $PS = +1$ is called positive, $PS = -1$ reverse phase shift. The present disclosure is not limited to the oscillations outlined above. For example, the oscillations may include circular and trapezoidal oscillations and still be within the scope of this disclosure, in accordance with various embodiments.

$$O_i(s) = \cos\big(2\pi(z(s)/\lambda + PS (i - 1)/\mathcal{N})\big) - 1 \qquad (\text{eq. } 2)$$

Static lag angle $v_i(s)$ is given by equation (3) specifies winding of flutes by constant axial lead $\mu$. Constant helix can be formulated likewise with a suitable $v_i$.

$$v_i(s) = 2\pi H(z(s)/\mu - (i - 1)/\mathcal{N}) \qquad (\text{eq. } 3)$$

Referring back to FIG. 2, during step 230, the trajectory of the serrated cutting edge point for incremental 3 - axis tool motion for specified tool tilt $\Phi$ and tip speed $V$ is calculated for a machining process along the tool path based on the engagement geometry and time. First, the dynamic lag angle combining flutes' winding and tool rotation is given by equation (4). Then the position of an edge point in space (s) and time (t) is given by equation (5).

$$\theta_i(s, t) = \varphi + i \Lambda + \omega t + v_i(s) \qquad (\text{eq. } 4)$$

$$\overline{p}_i(s, t) = \overline{S}_i\big(s, \theta_i(s, t)\big) + \mathcal{V}t\{\cos \Phi , 0, \sin \Phi\} \qquad (\text{eq. } 5)$$

In the following, simplified notation $p_i = \overline{\mathcal{P}}_i(s, 0)$, $\overline{p}_j = \overline{\mathcal{P}}(\overline{s}, \overline{t})$, partial derivatives $p'_i = d\overline{\mathcal{P}}_i(s, 0)/ds$, $\dot{p}_i = [\partial \overline{\mathcal{P}}_i(s, t)/\partial t]_{t\to 0}$ will be used. Note $z'(s) > 0 \Rightarrow \|p'_i\| > 0$. We further define $\Delta\overline{p}_{ij} = \overline{p}_j - p_i$, $\overline{p}'_j = \partial\Delta\overline{p}_{ij}/\partial\overline{s}$ and

$\dot{\boldsymbol{p}}_j = \partial \Delta \overline{\boldsymbol{p}}_{ij} / \partial \overline{t}$ . Vectors of the serrated edge will be written with a ℮ subscript, while those of a helical edge with t. The local serrated edge tangent $\boldsymbol{dl}_i^{℮} = \boldsymbol{p}_i'$ and local material velocity $\boldsymbol{V}_i^{℮} = -\dot{\boldsymbol{p}}_i$ . Subscript $i$ will be omitted henceforth.

When $\overline{\boldsymbol{s}}_y$ is used in place of $\overline{\boldsymbol{s}}_i$ in equation (5), the helical edge tangent $\boldsymbol{dl}^{t}$ and local velocity $\boldsymbol{V}^{t}$ are obtained.

Referring now to FIGs. 2, 3B, and 3C, the engagement geometry of step 210 may include a discretized set of tip points. For example, the full edge be discretized into the location sequence of points $\{s_0, s_1, \dots s_k, \dots s_M\}$. A subset $\{s_0, s_1, \dots s_k, \dots s_N\}$ satisfying $y_i(s_k) > y(s_k) - \mathbb{N}f$ as shown in Fig. 3B, in the vicinity of the serration tip, is retained. N is sufficiently large such that the protrusion of the edge out of the surfaces can be solved as described further herein. Scaling with f allows proportionately greater portion of the tip to be accounted as engaged in cut. Points corresponding to successive tips are separated into subsets or clusters $\{s_0^m \dots s_k^m, s_{k+1}^m \dots s_{N^m}^m\}$ indexed by m as shown in Fig. 3B and Fig. 3C. This may be utilized in step 230 of method 200 to allow efficient chip thickness calculation as described further herein. To do this, the points in $\{s_0, s_1, \dots s_k, \dots s_N\}$ are sequentially inspected for the axial position so that, starting with K = 0, m = 0, so = $s_0$, when $z(s_{K+1}) > z(s_K) + \Delta l$, a new subset starting m + 1 with $N^m = K$ and $s_0^{m+1} = s_{K+1}$ is begun.

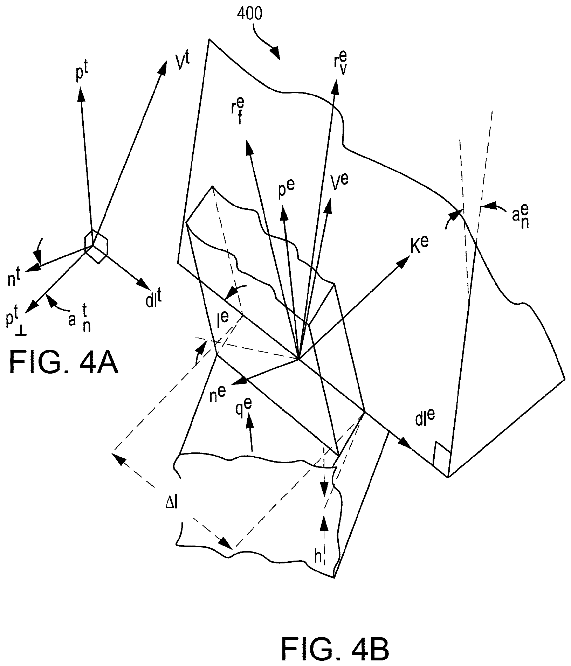

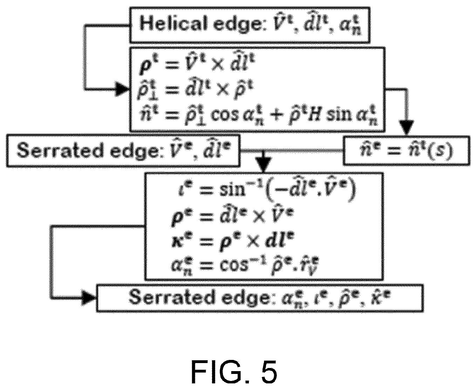

As mentioned previously, radial distance of a serrated edge point to the helical edge in the same axial cross section is small, i.e., A « y(s), so their respective rake face normal vectors $\hat{n}^{℮}$ and $\hat{n}^{t}$ in the same axial cross section are approximately coincident. This notion $\hat{n}^{℮}(z) = \hat{n}^{t}(z)$ called local normal rake correspondence LRNC is illustrated in Fig.3C, where vector 302 is equated to vector 304. Under LRNC, $z'(s) \geq 0 \Rightarrow \hat{n}^{℮}(s) = \hat{n}^{t}(s)$ . The local normal rake angle $\alpha_n^{℮}$ in the cutting element template shown in Fig. 4B is deduced following the sequence of steps in Fig. 5 along with other vectors and angles.

Referring now to Figs. 2 and 4B, the cutting element 400 is applied each tip point in the discretized set of tip points of the engagement geometry of step 210 along the tool path from step 220 throughout steps 230 and 240 of method 200. Uncut chip thickness h is calculated using local oblique cutting correspondence (LOCC) on the serrated edge. Note, vector $\boldsymbol{\varrho}^{℮}$ on uncut surface needs to coincide with $\boldsymbol{\rho}^{℮}$. Fig. 5 illustrates the application of the cutting element 400 from FIG. 4B at various locations on the serrated edge. Positive or negative $\alpha_n^{℮}$ occur when $\boldsymbol{\rho}^{℮}$ lies outside or inside the tool domain respectively. The vector $\boldsymbol{r}_V^{℮}$, lying on the rake face and perpendicular to the local serrated cutting edge tangent, is given by equation (7). Equation (8) uses Stabler's rule $\eta_f = \iota^{℮}$ for local rake chip flow vector $\boldsymbol{r}_f^{℮}$. Then, incremental area of uncut chip $\Delta A = h \Delta l \cos \iota^{℮}$.

$$\boldsymbol{r}_V^{℮} = \hat{\rho}^{℮} \cos \alpha_n^{℮} - \hat{\kappa}^{℮} \sin \alpha_n^{℮} \qquad (eq.\ 7)$$

$$\boldsymbol{r}_f^{℮} = \hat{r}_V^{℮} \cos \eta_f - \widehat{dl}^{℮} \sin \eta_f \qquad (eq.\ 8)$$

In helical cutters chip thickness h under LOCC for a helical edge was measured along $\hat{\rho}^{t}$ up to surface boundary of stock (stock surface) left behind only by the immediately preceding tooth. For a serrated edge, measurement along $\hat{\rho}^{℮}$ up to multiple preceding teeth stock surfaces may be required. However, stock surfaces by flute $m$ preceding and $n$ succeeding flute $i$ may be utilized in steps 230 and 240 of method 200 from FIG. 2 for typical feed rates. Thus, let $h^{ij} = \Delta \overline{\boldsymbol{p}}_{ij} \cdot \hat{\rho}_i^{℮}$ on flute $i$ due to interaction with stock surface of tooth $j = m$, $n$, by solving $\overline{s}$ and $\overline{t}$ from equations (9).

$$\begin{cases} \Delta \overline{\boldsymbol{p}} \cdot \boldsymbol{dl}^{℮} = 0 \\ \Delta \overline{\boldsymbol{p}} \cdot \boldsymbol{V}^{℮} = 0 \end{cases} \qquad (eq.\ 9)$$

On each of the clusters $\{s_0^m \dots s_k^m, s_{k+1}^m \dots s_{N^m}^m\}$ defined above, $\overline{s}_k^m$ and $\overline{t}_k^m$ from the engagement contour of step 210 and the tool path of step 220 from method 200 may be utilized in equation (9) to yield an uncut chip thickness $h_k^m$ at each $s_k^m$. For example, uncut chip thickness calculations may be performed invoking the proximity of points sequentially in each cluster. Consider cluster m on tooth $i$. Dropping the superscript m, let it be given by the set $\{s_0 \dots s_k, s_{k+1} \dots s_N\}$ where $\Delta s_k = s_{k+1} - s_k$. Let $p_i^k = p_i(s_k, 0)$ . and $\hat{\rho}^k = \hat{\rho}_i^{\oplus}(s_k)$ . We desire

$$h_k^{ij} = \left(\bar{p}_j(\bar{s}_k, \bar{t}_k) - p_i^k\right) \cdot \hat{\rho}^k$$ at each $s_k$. That is, the solution set $\{(\bar{s}_0, \bar{t}_0), (\bar{s}_1, \bar{t}_1), \dots, (\bar{s}_N, \bar{t}_N)\}$ on stock surface $j$ satisfying the *LOCC* condition of equations (9). The $(\bar{s}_k, \bar{t}_k)$ are sequentially close to each other if $\Delta l$ is sufficiently small in equation (6). Therefore, knowing $\bar{p}_j'(\bar{s}_k, \bar{t}_k)$, $\dot{\bar{p}}_j(\bar{s}_k, \bar{t}_k)$, an Armijo backtracking line-search (*ABLS*) method can be setup to solve for $(\bar{s}_{k+1}, \bar{t}_{k+1})$ as the solution for point $s_{k+1}$ with $(\bar{s}_k, \bar{t}_k)$ as the starting point. To formulate a scheme for $s_0$, choose $(s_0, t_0)$, $t_0 = -\text{mod}(j - i, \mathcal{N})\Delta\tau$ as starting point. The only values of $j$ which need be considered are are flute $m$ preceding and flute $n$ succeeding flute $i$; all other surfaces lead flute $i$ at location $s_k$. At fixed s, the physically realized chip thickness is the minimum value when both $h_k^{im} > 0$ and $h_k^{in} > 0$, *i.e.*, $h_k = \max\left(\min\left(h_k^{im}, h_k^{in}\right), 0\right)$. Thus, for a given engagement contour from step 210 of method 200 traveling along a tool path defined in step 220 of method 200, clusters outside the engagement contour may be discarded. *ABLS* is used for solving $\|\Delta\bar{p}_t\|$ also

The axial distance of discs' interaction with a workpiece 124 from FIG. 1 (i.e., $z(\bar{s})$ - $z(s)$) may be defined by $\Delta z$. Only $s_k^m$ with $h_k^m > 0$ are locations a chip is physically realized. Thus, $s_k^m$ with $s_k^m \leq 0$ may be removed from bending moment calculations in step 230 of method 200 from FIG. 2.

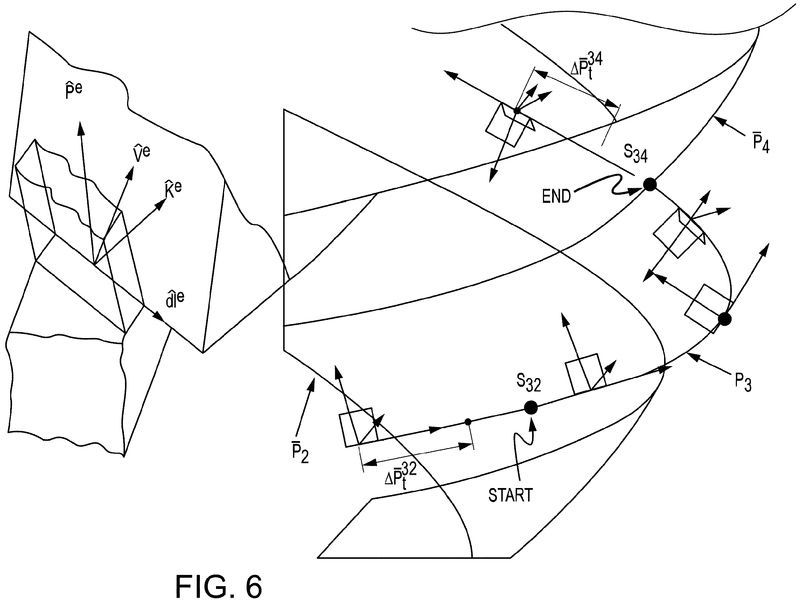

To illustrate *LOCC* in serrated endmill cutters further, in various embodiments, FIG. 6 shows portion of one serration of flute $i$ = 3 protruding outside the stock surfaces of flutes $m$ = 2 and $n$ = 4. Note that $h_k^m$ can be positive in the portion of the cutting edge lying behind surface of tooth $j = m$, $n$ (immediately prior and later). For example, as shown in FIG. 6, a portion of $p_3$ protrudes in front of the surfaces $\bar{p}_2$ and $\bar{p}_4$ and intersects them at s = $s_{32}$ and s = $s_{34}$ respectively. But though both $h^{32} > 0$ and $h^{34} > 0$ for points on $p_3$ outside the protrusion interval $s_{32} \leq s \leq s_{34}$, a chip is not physically realized at such points because $\rho^{\oplus}$ and $\varrho^{\oplus}$ as defined above and in Fig. 4B are in opposite directions and a chip would not be produced.

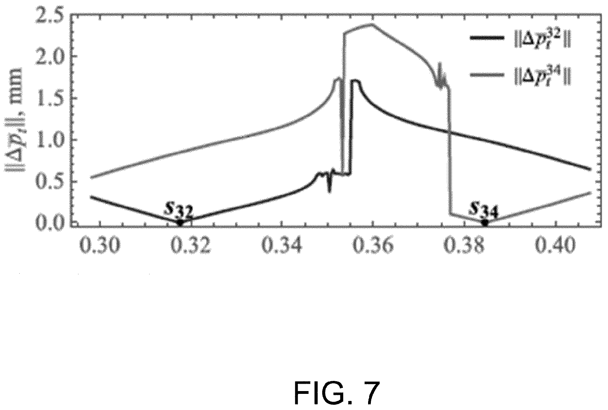

To solve $s_{32}$ and $s_{34}$ to isolate the protrusion interval $s_{32} \leq s \leq s_{34}$ the point of intersection of the curve $p_3$ with the surfaces $\bar{p}_2$ and $\bar{p}_4$ is found, where the distance of the point to the respective surface vanishes along the curve tangent. First, distance of the point on $p_3$ to $\bar{p}_2$ and $\bar{p}_4$ along its local tangent $dl^{\oplus}$ is calculated as $\|\Delta\bar{p}_t^{32}\|$ and $\|\Delta\bar{p}_t^{34}\|$ as shown in FIG. 6. The points on $p_3$ from clusters $\{s_0^m \dots s_k^m, s_{k+1}^m \dots s_{N^m}^m\}$ lying closest to $\bar{p}_2$ and $\bar{p}_4$ exhibit an absolute minimum $\|\Delta\bar{p}_t\|$ and can be taken as the points of intersection. To find distance along $dl^{\oplus}$ a point on $\bar{p}_2$ or $\bar{p}_4$ so that $\Delta\bar{p}$ and $dl^{\oplus}$ are parallel should be determined. This can be algebraically set up as solving for $\bar{s}$ and $\bar{t}$ for each $s_k^m$ in equations (9) with the vectors $\rho^{\oplus}$ and $\kappa^{\oplus}$ used in place of $dl^{\oplus}$ and $V^{\oplus}$ The same *ABLS* root-finding strategy defined above may be used for $\bar{s}$ and $\bar{t}$ also. FIG. 7 illustratively shows $\|\Delta\bar{p}_t\|$ attaining an absolute minimum at $s_{32}$ and $s_{34}$, in accordance with various embodiments.

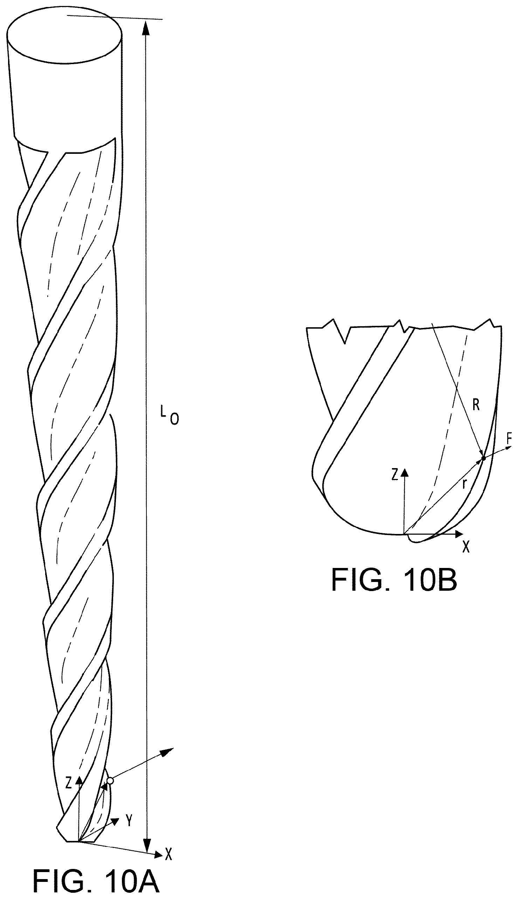

Referring back to FIGs. 2 and 4B, forces arising from normal ($K_n$) and frictional ($K_f$) pressures on the rake face of the subtractive component 110 from FIG. 1 are considered in the cutting element 400 of FIG. 4B resulting in local incremental forces calculated based on the above at each location along an engagement contour of a subtractive component 110 from FIG. 1. The incremental forces may be calculated by a mechanical force model utilizing the following equations: $\Delta F_n = -K_n \Delta A\, \hat{n}^{\oplus}$ and $\Delta F_f = K_f \Delta A \hat{r}_f^{\oplus}$, where $K_n(h, V^{\oplus}, \alpha_n^{\oplus})$ and $K_f(h, V^{\oplus}, \alpha_n^{\oplus})$ are functions of respective variables in parantheses. With brief reference to FIGs. 10A-B (e.g., an end mill), and 11A-B (e.g., a face mill), the local torque and bending moment may be calculated with reference to the following equations. Knowing the overhang length $L_0$ and the position r with respect to a coordinate system fixed to the tool tip, the local moment vector $\Delta M$ = (r - $L_0\hat{e}_Z$) × ($\Delta F_n$ + $\Delta F_f$). The local torque is a scalar sum $\Sigma\Delta M_Z$ and local bending moment is vectorially summed from all locations as $\Sigma\Delta M_X\hat{e}_X + \Delta M_Y\hat{e}_Y$. The global bending moment on the tool is $\sqrt{M_X^2 + M_Y^2}$. In various embodiments, this general formulation is agnostic to the rotational profile of the tool.

The local incremental forces may be defined relative to an axial distance from the proximal end 112 of the subtractive component 110 from FIG. 1. In this regard, each force for each cluster in the clusters $\{s_0^m \dots s_k^m, s_{k+1}^m \dots s_{N^m}^m\}$ defined above, $\bar{s}_k^m$ and $\bar{t}_k^m$ from the engagement contour of step 210 and the tool path of step 220 from method 200 is associated with a local bending moment at the respective cluster location. Thus, step 230 includes calculating a bending moment for the subtractive component 110 from FIG. 1 throughout a tool path from step 220 based on an engagement contour from step 210 as a function of time and feed rate.

In various embodiments, the method 200 may be implemented via a physics-based grinding/milling process simulator that includes one or more controllers (e.g., processors) and one or more tangible, non-transitory memories capable of implementing digital or programmatic logic. In various embodiments, for example, the one or more controllers are one or more of a general purpose processor, digital signal processor (DSP), application specific integrated circuit (ASIC), field programmable gate array (FPGA), or other programmable logic device, discrete gate, transistor logic, or discrete hardware components, or any various combinations thereof or the like. System program instructions and/or controller instructions may be loaded onto a non-transitory, tangible computer-readable medium having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals per se..

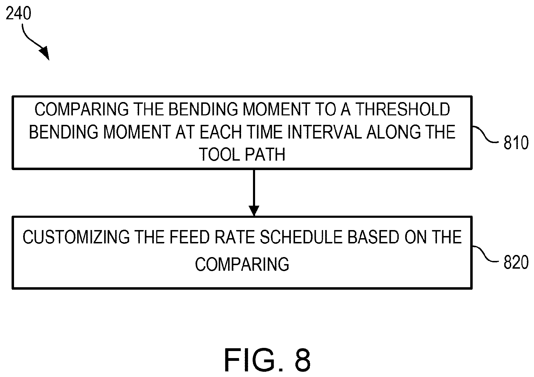

Method 200 includes calculating a bending moment along the tool path as a function of feed rate (step 230) and determining a feed rate schedule for a machining process of the component using the bending moment (step 240). Referring now to FIG. 8, determining the feed rate schedule from step 240 may further comprise comparing the bending moment to a threshold bending moment at each time interval along the tool path (step 810), and customizing the feed rate schedule based on the comparing from step 810 (step 820). In this regard a variable feed rate schedule may be customized (e.g., optimized) via method 200 for a component being manufactured from a workpiece 124 from FIG. 1 via a machine tool 120 (e.g., subtractive component 110) from FIG. 1 based on the comparing. For example, customizing the feed rate schedule may modify a feed rate schedule of the subtractive component 110 from FIG. 1, at various points in a tool path from step 220, relative to a baseline feed rate schedule for the machining process utilizing the subtractive component 110 and workpiece 124 based on the comparing from step 810.

In various embodiments, the threshold bending moment in step 810 may correspond to, or be scaled from, a bending moment limit of the spindle 122 from FIG. 1. Exceeding the bending moment limit of the spindle 122 from FIG. 1 may result in breaking of the subtractive component 110 or the subtractive component pulling out of the spindle 122 from FIG. 1. In various embodiments, the threshold bending moment may be between 80% and 100% of the bending moment limit, or between 85% and 99% of the bending moment limit, or between 85% and 95% of the bending moment limit. In this regard, a factor of safety may be incorporated into method 200 from FIG. 2.

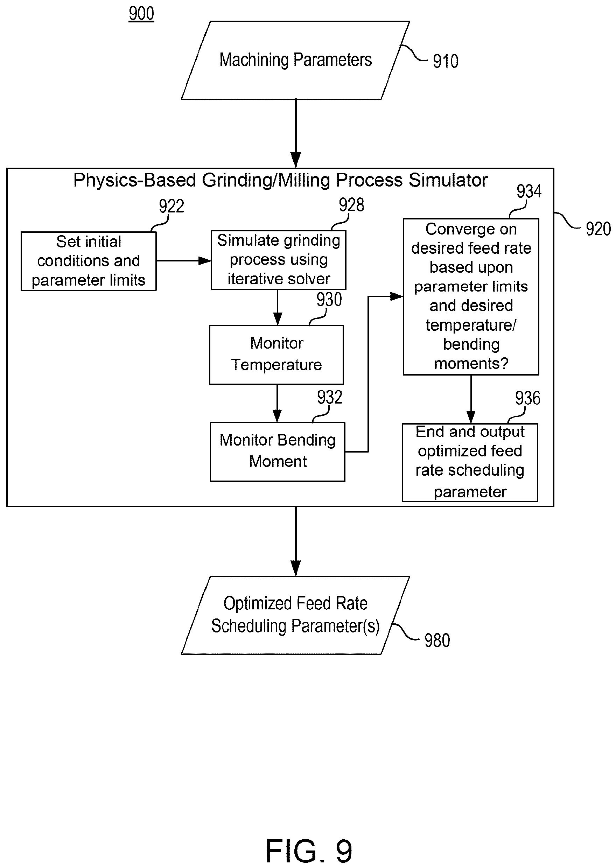

With reference to FIG. 9, a flow chart 900 of a physics-based grinding/milling process simulator 920 (also referred to herein as a virtual machining simulation environment), which takes the engagement contour of the subtractive component 110 from FIG. 1 and the tool path from step 220 of FIG. 2 as input parameters 910, is provided to output a customized feed rate schedule parameter 980, such as optimized feed-rates, based on bending moments throughout the machining process. In this regard, steps 230, 240 from method 200 of FIG. 2 may be performed by physics-based grinding/milling process simulator 920. In various embodiments, the physics-based grinding/milling process simulator 920 includes one or more controllers (e.g., processors) and one or more tangible, non-transitory memories capable of implementing digital or programmatic logic. In various embodiments, for example, the one or more controllers are one or more of a general purpose processor, digital signal processor (DSP), application specific integrated circuit (ASIC), field programmable gate array (FPGA), or other programmable logic device, discrete gate, transistor logic, or discrete hardware components, or any various combinations thereof or the like. System program instructions and/or controller instructions may be loaded onto a non-transitory, tangible computer-readable medium having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals per se.

Simulator 920 may be initiated by a user or other program and initial conditions and parameter limits may be set at step 922. Exemplary initial conditions include stick out length (e.g., measured in inches), drilling feed (e.g., measured in inches per minute (ipm)), rotational speed (e.g., measured in rpm), and step size for the iterative solver, among others. Exemplary parameter limits include maximum feed rate (i.e., the maximum translational speed; e.g., measured in ipm), among others. In various embodiments, the initial conditions and parameters are based on the engagement contour of the subtractive component 110 from FIG. 1 and the tool path for the subtractive component 110.

At step 928, simulator 920 may simulate a virtual grinding process using built-in physics based equations (see equations (1) - (9) described herein). At each iteration, simulator 920 may calculate an updated feed rate scheduling parameter (e.g., feed rate, cutting depth, and/or spindle speed). The updated feed rate scheduling parameter may be used during the next iteration to converge on one or more desired solutions. Stated differently, the feed rate scheduling parameter may be iteratively solved by simulating a metal cutting process (i.e., using physics based equations) of the subtractive component in a virtual machining simulation environment (i.e., using software) using at least the engagement contour of the subtractive component and a tool path for the component to be machined.

At steps 930 and 932, simulator 920 may calculate/monitor the temperature of the subtractive component and the bending moment experienced by the spindle 122 from FIG. 1 by the tool machine (e.g., electric motor), respectively. At step 934, simulator 920 may continue to iteratively solve the built in physics based equations to converge on a desired feed rate- e.g., based on desired temperature and bending moments, among other desired parameters.

At step 936, once a desired optimized feed rate is achieved, the simulator 920 may output the customized feed rate schedule parameter 980 (such as feed rate, cutting depth, spindle speed, etc.) to be implemented during a physical grinding process on an actual (as opposed to virtual) workpiece.

The physics-based grinding modeling software of the present disclosure may be provided as an add-on to a virtual grinding modeling framework, in accordance with various embodiments. This approach expands the scope of use of subtractive component simulations which currently use broad assumptions for subtractive components with complex geometry and fail to account for bending moments in any manner during the simulation process. The systems and methods of the present disclosure can also be useful in machine maintenance decisions (e.g., spindle bearing overhauls), cutter resharpening, and/or relieving and targeting edge honing.

In various embodiments, because bending moment is driven by forces which naturally fluctuate in milling, bending moment also fluctuates owing to tool rotation. If only a few spikes are encountered in one rotation, the feed rate does not need to be dialed down, thus enhancing productivity. Thus, feed scheduling considering oscillation of all quantities concerned, forces, moments, torque and power leads to surprising optimization results.

Although described herein as optimizing for moments experienced by the spindle, the present disclosure is not limited in this regard. For example, resultant forces and/or chip thickness may be utilized as the driving metric, in accordance with various embodiments.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the inventions. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

**Claims**

1. A feed rate scheduling method (200), comprising:

   receiving an engagement geometry of a subtractive component (110) mounted to a spindle (122) for use in a computer numerical control (CNC) machining process;
   receiving a tool path for forming a component from a workpiece (124) via the CNC machining process;
   calculating a plurality of bending moments of the spindle (122) at various intervals along the tool path; and
   determining a feed rate schedule for the tool path of the subtractive component (110) based on the plurality of bending moments;
   **characterised by** the subtractive component (110) comprising a serrated endmill cutter,
   wherein the plurality of bending moments are calculated as a function of feed rate for the subtractive component (110) based on the engagement geometry and the tool path, and
   wherein during the calculating the plurality of bending moments of the spindle (122), a trajectory of a serrated cutting edge of the serrated endmill cutter for a tool tilt and a tip speed for a machining process along the tool path based on the engagement geometry and time is calculated.

2. The method according to claim 1, wherein the calculating the feed rate schedule comprises:

simulating a metal cutting process of the subtractive component (110) in a virtual machining simulation environment using the engagement geometry and the tool path; and/or

comparing each bending moment in the plurality of bending moments of the spindle (122) to a bending moment threshold.

3. The method according to claim 1 or 2, wherein calculating the plurality of bending moments includes calculating local forces at various local engagement locations of the engagement geometry along the tool path.

4. The method according to claim 3, wherein the local forces are calculated based on a tip speed of the subtractive component (110), a local normal rake angle ($\alpha_n^{\oplus}$), and an uncut chip thickness (h).

5. The method according to claim 3 or 4, wherein a plurality of local bending moments are calculated based on the local forces and an axial distance from the spindle (122) to a local location experiencing the local forces to calculate each bending moment in the plurality of bending moments.

6. The method according to any preceding claim, further comprising:
performing the CNC machining process with the subtractive component (110) and the feed rate schedule.

7. The method according to any preceding claim, further comprising:
forming the component by performing the CNC machining process.

8. A milling process simulator (920) for feed rate scheduling for a subtractive component (110), comprising:

a virtual machining simulation environment having a processor; and
a tangible, non-transitory memory configured to communicate with the processor, the tangible, non-transitory memory having instructions stored thereon that, in response to execution by the processor, cause the virtual machining simulation environment to perform operations comprising:

receiving an engagement contour of the subtractive component (110) mounted to a spindle (122) of a computer numerical control (CNC) machine tool;
receiving a tool path to form a component from a workpiece (124) with the subtractive component (110);
calculating a plurality of bending moments of the spindle (122) at various intervals along the tool path; and
determining a feed rate schedule based on the plurality of bending moments of the spindle (122),
**characterised by** the subtractive component (110) comprising a serrated endmill cutter,
wherein the plurality of bending moments are calculated as a function of feed rate for the subtractive component (110) based on the engagement geometry and the tool path, and
wherein during the calculating the plurality of bending moments of the spindle (122), a trajectory of a serrated cutting edge of the serrated endmill cutter for a tool tilt and a tip speed for a machining process along the tool path based on the engagement geometry and time is calculated.

9. The milling process simulator according to claim 8, wherein calculating the feed rate schedule further comprises:

comparing each bending moment in the plurality of bending moments to a threshold bending moment at each interval in the various intervals along the tool path; and, optionally,
customizing the feed rate schedule based on the comparing.

10. The milling process simulator of claim 8 or 9, wherein calculating each bending moment in the plurality of bending moments further comprises calculating a plurality of local bending moments based on the engagement contour of the subtractive component.

11. The milling process simulator of claim 10, wherein each local bending moment in the plurality of local bending moments is calculated based on a tip speed of the subtractive component (110), a local normal rake angle ($\alpha_n^{\oplus}$), and an uncut chip thickness (h); and/or
wherein each local bending moment in the plurality of local bending moments is calculated based on a local force and an axial distance from the spindle (122) to a local location of the local force on the subtractive component (110).

**12.** The method of claim 1, wherein each bending moment in the plurality of bending moments is based on a plurality of local bending moments calculated at a local location on the subtractive component (110) based on a local force at the local location and an axial distance from the spindle (122) to the local force.

**13.** The method of claim 12, wherein calculating the feed rate schedule further comprises:
comparing each bending moment in the plurality of bending moments to a threshold bending moment at various intervals along the tool path.

**14.** The method of claim 13, wherein customizing the feed rate schedule is based on the comparing.

**15.** The method of claim 12, 13 or 14, further comprising using the feed rate schedule during a computer numerical control (CNC) machining process.

**Patentansprüche**

**1.** Verfahren zur Zuführgeschwindigkeitsplanung (200), umfassend:

Empfangen einer Eingriffsgeometrie einer subtraktiven Komponente (110), die an einer Spindel ( 122 ) zur Verwendung in einem Bearbeitungsprozess mit computergestützter numerischer Steuerung (CNC) montiert ist;
Empfangen eines Werkzeugwegs zum Formen einer Komponente aus einem Werkstück (124) über den CNC-Bearbeitungsprozess;
Berechnen einer Vielzahl von Biegemomenten der Spindel (122) an verschiedenen Intervallen entlang des Werkzeugwegs; und
Bestimmen eines Zuführgeschwindigkeitsplans für den Werkzeugweg der subtraktiven Komponente (110) basierend auf der Vielzahl von Biegemomenten;
**dadurch gekennzeichnet, dass** die subtraktive Komponente (110) einen gezahnten Schaftfräser umfasst, wobei die Vielzahl von Biegemomenten abhängig von der Zuführgeschwindigkeit für die subtraktive Komponente (110) basierend auf der Eingriffsgeometrie und dem Werkzeugweg berechnet wird, und
wobei während des Berechnens der Vielzahl von Biegemomenten der Spindel (122) eine Bahn einer gezahnten Schneidkante des gezahnten Schaftfräsers für eine Werkzeugneigung und eine Spitzengeschwindigkeit für einen Bearbeitungsprozess entlang des Werkzeugwegs basierend auf der Eingriffsgeometrie und der Zeit berechnet wird.

**2.** Verfahren nach Anspruch 1, wobei das Berechnen des Zuführgeschwindigkeitsplans Folgendes umfasst:

Simulieren eines Metallschneideprozesses der subtraktiven Komponente (110) in einer virtuellen Bearbeitungssimulationsumgebung unter Verwendung der Eingriffsgeometrie und des Werkzeugwegs; und/oder
Vergleichen jedes Biegemoments in der Vielzahl von Biegemomenten der Spindel (122) mit einem Biegemomentschwellenwert.

**3.** Verfahren nach Anspruch 1 oder 2, wobei das Berechnen der Vielzahl von Biegemomenten das Berechnen lokaler Kräfte an verschiedenen lokalen Eingriffsstellen der Eingriffsgeometrie entlang des Werkzeugwegs einschließt.

**4.** Verfahren nach Anspruch 3, wobei die lokalen Kräfte basierend auf einer Spitzengeschwindigkeit der subtraktiven Komponente (110), einem lokalen normalen Spanwinkel ( $\alpha_n^\oplus$ ) und einer Rohspandicke (h) berechnet werden.

**5.** Verfahren nach Anspruch 3 oder 4, wobei eine Vielzahl von lokalen Biegemomente basierend auf den lokalen Kräften und einem axialen Abstand von der Spindel (122) zu einer lokalen Stelle, an der die lokalen Kräfte auftreten, berechnet wird, um jedes Biegemoment in der Vielzahl von Biegemomenten zu berechnen.

**6.** Verfahren nach einem der vorhergehenden Ansprüche, ferner umfassend:
Durchführen des CNC-Bearbeitungsprozesses mit der subtraktiven Komponente (110) und dem Zuführgeschwindigkeitsplan.

**7.** Verfahren nach einem der vorhergehenden Ansprüche, ferner umfassend:
Formen der Komponente durch Ausführen des CNC-Bearbeitungsprozesses.

8. Fräsprozesssimulator (920) zur Zuführgeschwindigkeitsplanung für eine subtraktive Komponente (110), umfassend:

   eine virtuelle Bearbeitungssimulationsumgebung, aufweisend einen Prozessor; und
   einen physischen, nicht flüchtigen Speicher, der ausgelegt ist, um mit dem Prozessor zu kommunizieren, wobei der physische, nicht flüchtige Speicher darin gespeicherte Anweisungen aufweist, die die virtuelle Bearbeitungssimulationsumgebung als Reaktion auf die Ausführung durch den Prozessor veranlassen, Vorgänge durchzuführen, die Folgendes umfassen:

   Empfangen einer Eingriffskontur der subtraktiven Komponente (110), die an einer Spindel (122) einer Werkzeugmaschine mit computergestützter numerischer Steuerung (CNC) montiert ist;
   Empfangen eines Werkzeugwegs zum Formen einer Komponente aus einem Werkstück (124) mit der subtraktiven Komponente (110);
   Berechnen einer Vielzahl von Biegemomenten der Spindel (122) an verschiedenen Intervallen entlang des Werkzeugwegs; und
   Bestimmen eines Zuführgeschwindigkeitsplans basierend auf der Vielzahl von Biegemomenten der Spindel (122),
   **dadurch gekennzeichnet, dass** die subtraktive Komponente (110) einen gezahnten Schaftfräser umfasst, wobei die Vielzahl von Biegemomenten abhängig von der Zuführgeschwindigkeit für die subtraktive Komponente (110) basierend auf der Eingriffsgeometrie und dem Werkzeugweg berechnet wird, und wobei während des Berechnens der Vielzahl von Biegemomenten der Spindel (122) eine Bahn einer gezahnten Schneidkante des gezahnten Schaftfräsers für eine Werkzeugneigung und eine Spitzengeschwindigkeit für einen Bearbeitungsprozess entlang des Werkzeugwegs basierend auf der Eingriffsgeometrie und der Zeit berechnet wird.

9. Fräsprozesssimulator nach Anspruch 8, wobei das Berechnen des Zuführgeschwindigkeitsplans ferner Folgendes umfasst:

   Vergleichen jedes Biegemoments in der Vielzahl von Biegemomenten mit einem Schwellenbiegemoment an jedem Intervall in den verschiedenen Intervallen entlang des Werkzeugwegs; und optional
   Anpassen des Zuführgeschwindigkeitsplans basierend auf dem Vergleichen.

10. Fräsprozesssimulator nach Anspruch 8 oder 9, wobei das Berechnen jedes Biegemoments in der Vielzahl von Biegemomenten ferner das Berechnen einer Vielzahl von lokalen Biegemomenten basierend auf der Eingriffskontur der subtraktiven Komponente umfasst.

11. Fräsprozesssimulator nach Anspruch 10, wobei jedes lokale Biegemoment in der Vielzahl von lokalen Biegemomenten basierend auf einer Spitzengeschwindigkeit der subtraktiven Komponente (110), einem lokalen normalen Spanwinkel ($\alpha_n^{\oplus}$) und einer Rohspandicke (h) berechnet wird; und/oder

   wobei jedes lokale Biegemoment in der Vielzahl von lokalen Biegemomenten basierend auf einer lokalen Kraft und einem axialen Abstand von der Spindel (122) zu einer lokalen Stelle der lokalen Kraft auf der subtraktiven Komponente (110) berechnet wird.

12. Verfahren nach Anspruch 1, wobei jedes Biegemoment in der Vielzahl von Biegemomenten auf einer Vielzahl von lokalen Biegemomenten basiert, die an einer lokalen Stelle auf der subtraktiven Komponente (110) basierend auf einer lokalen Kraft an der lokalen Stelle und einem axialen Abstand von der Spindel (122) zu der lokalen Kraft berechnet werden.

13. Verfahren nach Anspruch 12, wobei das Berechnen des Zuführgeschwindigkeitsplans ferner Folgendes umfasst: Vergleichen jedes Biegemoments in der Vielzahl von Biegemomenten mit einem Schwellenbiegemoment an verschiedenen Intervallen entlang des Werkzeugwegs.

14. Verfahren nach Anspruch 13, wobei das Anpassen des Zuführgeschwindigkeitsplans auf dem Vergleichen basiert.

15. Verfahren nach Anspruch 12, 13 oder 14, ferner umfassend das Verwenden des Zuführgeschwindigkeitsplans während eines Bearbeitungsprozesses mit computergestützter numerischer Steuerung (CNC).

**Revendications**

1. Procédé de planification de vitesse d'avance (200), comprenant :

   la réception d'une géométrie d'engagement d'un composant soustractif (110) monté sur une broche (122) destinée à être utilisée dans un processus d'usinage à commande numérique par ordinateur (CNC) ;
   la réception d'un parcours d'outil pour former un composant à partir d'une pièce (124) par le processus d'usinage CNC ;
   le calcul d'une pluralité de moments de flexion de la broche (122) à divers intervalles le long du parcours d'outil ; et
   la détermination d'un programme de vitesse d'avance pour le parcours d'outil du composant soustractif (110) sur la base de la pluralité de moments de flexion ;
   **caractérisé par le fait que** le composant soustractif (110) comprend une fraise dentelée en bout,
   dans lequel la pluralité de moments de flexion sont calculés en fonction de la vitesse d'avance du composant soustractif (110) sur la base de la géométrie d'engagement et du parcours d'outil, et
   dans lequel, pendant le calcul de la pluralité de moments de flexion de la broche (122), une trajectoire d'un bord de coupe dentelé de la fraise dentelée en bout pour une inclinaison d'outil et une vitesse de pointe pour un processus d'usinage le long du parcours d'outil sur la base de la géométrie d'engagement et du temps sont calculées.

2. Procédé selon la revendication 1, dans lequel le calcul du programme de vitesse d'avance comprend :

   la simulation d'un processus de coupe de métal du composant soustractif (110) dans un environnement de simulation d'usinage virtuel en utilisant la géométrie d'engagement et du parcours d'outil ; et/ou
   la comparaison de chaque moment de flexion dans la pluralité de moments de flexion de la broche (122) à un seuil de moment de flexion.

3. Procédé selon la revendication 1 ou 2, dans lequel le calcul de la pluralité de moments de flexion inclut le calcul de forces locales à divers emplacements d'engagement locaux de la géométrie d'engagement le long du parcours d'outil.

4. Procédé selon la revendication 3, dans lequel les forces locales sont calculées sur la base d'une vitesse de pointe du composant soustractif (110), d'un angle d'attaque normal local ( $\alpha_n^e$ )et d'une épaisseur de copeau non coupé (h).

5. Procédé selon la revendication 3 ou 4, dans lequel une pluralité de moments de flexion locaux sont calculés sur la base des forces locales et d'une distance axiale de la broche (122) à un emplacement local subissant les forces locales pour calculer chaque moment de flexion dans la pluralité de moments de flexion.

6. Procédé selon une quelconque revendication précédente, comprenant également :
   l'exécution du processus d'usinage CNC avec le composant soustractif (110) et le programme de vitesse d'avance.

7. Procédé selon une quelconque revendication précédente, comprenant également :
   la formation du composant en effectuant le processus d'usinage CNC.

8. Simulateur de processus de fraisage (920) pour la planification de la vitesse d'avance d'un composant soustractif (110), comprenant :

   un environnement de simulation d'usinage virtuel doté d'un processeur ; et
   une mémoire tangible non transitoire configurée pour communiquer avec le processeur, la mémoire tangible non transitoire ayant des instructions stockées dans celle-ci qui, en réponse à l'exécution par le processeur, amènent l'environnement de simulation d'usinage virtuel à exécuter des opérations comprenant :

   la réception d'un contour d'engagement du composant soustractif (110) monté sur une broche (122) d'une machine-outil à commande numérique par ordinateur (CNC) ;
   la réception d'un parcours d'outil pour former un composant à partir d'une pièce (124) avec le composant soustractif (110) ;
   le calcul d'une pluralité de moments de flexion de la broche (122) à divers intervalles le long du parcours d'outil ; et
   la détermination d'un programme de vitesse d'avance sur la base de la pluralité de moments de flexion de la broche (122), **caractérisé par le fait que** le composant soustractif (110) comprend une fraise dentelée en bout,
dans lequel la pluralité de moments de flexion sont calculés en fonction de la vitesse d'avance du composant soustractif (110) sur la base de la géométrie d'engagement et du parcours d'outil, et
dans lequel, pendant le calcul de la pluralité de moments de flexion de la broche (122), une trajectoire d'un bord de coupe dentelé de la fraise dentelée en bout pour une inclinaison d'outil et une vitesse de pointe pour un processus d'usinage le long du parcours d'outil sur la base de la géométrie d'engagement et du temps sont calculées.

9. Simulateur de processus de fraisage selon la revendication 8, dans lequel le calcul du programme d'avance comprend également :

la comparaison de chaque moment de flexion dans la pluralité de moments de flexion à un moment de flexion seuil à chaque intervalle dans les différents intervalles le long du parcours d'outil ; et, éventuellement,
la personnalisation de la planification de vitesse d'avance en fonction de la comparaison.

10. Simulateur de processus de fraisage selon la revendication 8 ou 9, dans lequel le calcul de chaque moment de flexion dans la pluralité de moments de flexion comprend également le calcul d'une pluralité de moments de flexion locaux sur la base du contour d'engagement du composant soustractif.

11. Simulateur de processus de fraisage selon la revendication 10, dans lequel chaque moment de flexion local dans la pluralité de moments de flexion locaux est calculé sur la base de la vitesse de pointe du composant soustractif (110), de l'angle d'attaque normal local ( $\alpha_n^{\oplus}$ )et de l'épaisseur du copeau non coupé (h) ; et/ou
dans lequel chaque moment de flexion local dans la pluralité de moments de flexion locaux est calculé sur la base d'une force locale et d'une distance axiale de la broche (122) à un emplacement local de la force locale sur le composant soustractif (110).

12. Procédé selon la revendication 1, dans lequel chaque moment de flexion dans la pluralité de moments de flexion est basé sur une pluralité de moments de flexion locaux calculés à un emplacement local sur le composant soustractif (110) sur la base d'une force locale à l'emplacement local et d'une distance axiale de la broche (122) à la force locale.

13. Procédé selon la revendication 12, dans lequel le calcul de la planification de vitesse d'avance comprend également :
la comparaison de chaque moment de flexion dans la pluralité de moments de flexion à un moment de flexion seuil à différents intervalles le long du parcours d'outil.

14. Procédé selon la revendication 13, dans lequel la personnalisation du programme de vitesse d'avance est basée sur la comparaison.

15. Procédé selon la revendication 12, 13 ou 14, comprenant également l'utilisation du programme de vitesse d'avance pendant un processus d'usinage à commande numérique par ordinateur (CNC).

FIG. 1

200

RECEIVING AN ENGAGEMENT GEOMETRY OF A
SUBTRACTIVE TOOL ⌇ 210

RECEIVING A CUTTING PATH TO FORM A COMPONENT
FROM A WORKPIECE WITH THE SUBTRACTIVE TOOL ⌇ 220

CALCULATING A BENDING MOMENT ALONG THE TOOL
PATH AS A FUNCTION OF FEED RATE ⌇ 230

DETERMINING A FEED RATE SCHEDULE FOR A MACHINING
PROCESS OF THE COMPONENT USING THE BENDING
MOMENT ⌇ 240

# FIG. 2

Helical Subtractive Tool
w/o Serrated Edge

FIG. 3A

Helical Subtractive Tool w/o Serrated Edge

FIG. 3B

FIG. 3C

FIG. 4A

FIG. 4B

Helical edge: $\hat{V}^{t}, \hat{dl}^{t}, \alpha_{n}^{t}$

$$\boldsymbol{\rho}^{t} = \hat{V}^{t} \times \hat{dl}^{t}$$
$$\hat{\rho}_{\perp}^{t} = \hat{dl}^{t} \times \hat{\rho}^{t}$$
$$\hat{n}^{t} = \hat{\rho}_{\perp}^{t} \cos \alpha_{n}^{t} + \hat{\rho}^{t} H \sin \alpha_{n}^{t}$$

Serrated edge: $\hat{V}^{e}, \hat{dl}^{e}$

$$\hat{n}^{e} = \hat{n}^{t}(s)$$

$$\iota^{e} = \sin^{-1}\left(-\hat{dl}^{e}.\hat{V}^{e}\right)$$
$$\boldsymbol{\rho}^{e} = \hat{dl}^{e} \times \hat{V}^{e}$$
$$\boldsymbol{\kappa}^{e} = \boldsymbol{\rho}^{e} \times dl^{e}$$
$$\alpha_{n}^{e} = \cos^{-1} \hat{\rho}^{e}.\hat{r}_{V}^{e}$$

Serrated edge: $\alpha_{n}^{e}, \iota^{e}, \hat{\rho}^{e}, \hat{\kappa}^{e}$

# FIG. 5

FIG. 6

FIG. 7

EP 4 220 317 B1

240

```
┌─────────────────────────────────────────────────┐
│  COMPARING THE BENDING MOMENT TO A THRESHOLD     │
│  BENDING MOMENT AT EACH TIME INTERVAL ALONG THE  │── 810
│               TOOL PATH                          │
└─────────────────────────────────────────────────┘
                        │
                        ▼
┌─────────────────────────────────────────────────┐
│  CUSTOMIZING THE FEED RATE SCHEDULE BASED ON THE │── 820
│                 COMPARING                        │
└─────────────────────────────────────────────────┘
```

# FIG. 8

900

Machining Parameters — 910

Physics-Based Grinding/Milling Process Simulator — 920

922
Set initial conditions and parameter limits

928
Simulate grinding process using iterative solver

930
Monitor Temperature

932
Monitor Bending Moment

934
Converge on desired feed rate based upon parameter limits and desired temperature/ bending moments?

936
End and output optimized feed rate scheduling parameter

Optimized Feed Rate Scheduling Parameter(s) — 980

FIG. 9

FIG. 10A

FIG. 10B

FIG. 11B

FIG. 11A

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017227945 A1

- US 2015127139 A1

**Non-patent literature cited in the description**

- **KARUNAKARAN K P et al.** Octree-based NC simulation system for optimization of feed rate in milling using instantaneous force model. *The International Journal of Advanced Manufacturing Technology*, 2009
- **MERDOL S D et al.** Virtual cutting and optimization of three-axis milling processes. *The International Journal of Machine tools and Manufacture*, 2008

- **ALTINTAS et al.** Virtual High Performance Milling. *Cirp Annals*, 2007
- **LU XIAOHONG et al.** Cutting parameters optimization for MRR under the constraints of surface roughness and cutter breakage in micro-milling process.. *Journal of Mechanical Science and Technology*, 2018